# EUROPEAN PATENT APPLICATION

(11) **EP 4 306 431 A1**
(43) Date of publication of application: **17.01.2024**
(21) Application number: 22275097.8
(22) Date of filing: 15.07.2022
(51) Int. Cl.: B64D 45/00, B64C 13/28, B64C 13/46, B64C 13/50, B64C 13/12

(54) **AN ELECTRONIC UNIT FOR A TACTILE CUEING APPARATUS**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present invention relates to an Electronic Unit (1), EU, for a tactile cueing apparatus for a vehicle. The tactile cueing apparatus augments feel for an operator of the vehicle. The EU comprises a first channel (307A, 407A). The first channel (307A, 407A) is configured to monitor communication for determining a control mode of the first channel (307A, 407A). The control mode comprises a Reversionary Active Mode, the Reversionary Active Mode providing a control characteristic for limited augmented feel capability to the operator of the vehicle; and an Active Mode, wherein the Active Mode providing a control characteristic for fully augmented feel capability to the operator of the vehicle.

## Description

### FIELD

The present invention relates to continuous provision of augmented feel for an operator, in particular but not exclusively, an electronic unit for a tactile cueing apparatus for a vehicle, a tactile cueing apparatus system, a vehicle and a method for providing augmented feel.

### BACKGROUND

Many aircraft have mechanical linkage (e.g., rods, cables, gearing, bell-cranks) between a control inceptor and a flight control surfaces. In an aircraft of any size or performance, the control forces needed at the inceptor can become greater than the pilot can comfortably apply. Therefore, such aircraft have servo-assistance, generally hydraulic rams or motors. The inclusion of such servo-assistance deprives the pilot of most of the "feel" of the controls, so an illusion of feel has to be provided by mechanical devices such as springs and dampers which resist movement of the inceptor from its centre "hand off" position. A system can be retrofitted on such aircraft and provides augmented feel for the operators without having to change the entire control system of the aircraft or relying solely on the mechanical devices. This system is installed in parallel with the mechanical linkage connected to a control element of the aircraft and the control means of the aircraft. The system relies on a series of command messages being received from the Flight Control Computers (FCCs) of the aircraft to provide augmented feel. If there is a failure of all FCC communication, the system stops providing the augmented feel and disengages from the mechanical linkage entering into a passive mode.

### SUMMARY

The invention is defined by the features of the appended claims.

According to an aspect of the invention there is provided an Electronic Unit, EU, for a tactile cueing apparatus for a vehicle. The tactile cueing apparatus augments feel for an operator of the vehicle. The EU comprises a first channel. The first channel is configured to monitor communication for determining a control mode of the first channel. The control mode comprises a Reversionary Active Mode, the Reversionary Active Mode providing a control characteristic for limited augmented feel capability to the operator of the vehicle; and an Active Mode, wherein the Active Mode providing a control characteristic for fully augmented feel capability to the operator of the vehicle.

In this way, the vehicle is provided with some degree of augmented feel to the operator at all the time. With the Reversionary Active Mode the control feel remains relatively similar to the mode (i.e., Active Mode). In the Reversionary Active Mode, the vehicle can return for a repair and recover active mode during the operation if the signal messages being received is no longer at fault. In the Active Mode, the normal operational mode is provided, by providing adjustment of feel for the operator in real-time. If during the operation of the vehicle (e.g., flying), and the vehicle management system fails and recovers from its failure the EU allows the vehicle management system to provide control signals to resume optimised augmentation of the feel for the operator.

Preferably, the first channel is configured to monitor communication by receiving a signal message, the signal message comprises a vehicle control command; and monitoring the signal message for detecting a fault in the signal message. If the fault in the signal message is detected, then set the control mode to the Reversionary Active Mode.

Preferably the fault of the signal message is detected in occurrences of at least one of: receiving the signal message intermittently, not receiving the signal message, not receiving the signal message at an expected rate, receiving the signal message that has been corrupted, and receiving the signal message that does not have an expected integrity.

If there is a problem with the vehicle management system and such system no longer can transmit control signals then the EU ensures that the operator still receives augmented feel for the control of the vehicle. If the integrity of the signal message does not meet the integrity standard, then the EU does not use the signal message. In this way, the safety critical system may continuously maintain the integrity of the system. If the vehicle management system does not transmit satisfactory messages, then the tactile cueing apparatus system enters the Reversionary Active Mode to continuously provide the augmented feel.

Preferably, the signal message is originated from a vehicle management system.

Preferably, the first channel is further configured to monitor communication for determining availability of other signal message wherein if the other signal message is not available then set the control mode to the Reversionary Active Mode.

Preferably, the first channel is further configured to monitor communication for determining availability of other signal message, wherein if the other signal message is available, then the first channel is further configured to receive the other signal message; and monitor the other signal message for detecting a fault in the other signal message. If the fault in the other signal message is detected, then set the control mode to the Reversionary Active Mode; and if no fault in the other signal message is detected then set the control mode to the Active Mode.

Preferably, the other signal message is originated from a second vehicle management system.

In this way, the tactile cueing apparatus system ensures that if a vehicle management system fails, the tactile cueing apparatus system obtains necessary control signal from another vehicle management system on the vehicle. This ensures that there is safety measure on board such that the probability of complete failure of the vehicle control is reduced whilst continuously providing the augmented feel.

Preferably, the first channel is configured to determine a second control mode of other channel. If the second control mode of the other channel is the Active Mode, then relinquish control to maintain the Active Mode for the vehicle. If the second control mode of the other channel is the Reversionary Active Mode, then activate the Reversionary Active Mode.

Preferably, the other channel is configured to monitor communication for determining the second control mode of the other channel by receiving the signal message; and monitoring the signal message for detecting a fault in the signal message.

Preferably, the first channel and the other channel are segregated.

In this way, the tactile cueing apparatus system ensures that more than one channel is provided. The function of the first channel can be provided by other channels provided, reducing the probability of complete failure of the vehicle control whilst continuously providing the augmented feel.

Preferably, the control characteristic comprises a default setting for each of control axes of the vehicle.

In this way, a certain level of the augmented feel is continuously provided to the operator.

Preferably, the control characteristic is stored in the EU.

In this way, the tactile cueing apparatus system ensures that the operator received continuous augmented feel despite failure of the vehicle management system. This ensures the safety of the vehicle and the operator.

Preferably, the vehicle comprises an airplane or a helicopter.

Preferably, the EU provides a warning on a control panel of the vehicle notifying a detection of failure of the vehicle management system.

In this way the operator is aware of any failure in the systems of the vehicle. The operator is able to anticipate the kind of support, augmented feel the operator is provided with.

According to an aspect of the invention there is provided a computer-implemented method for an Electronic Unit, EU, for a tactile cueing apparatus for a vehicle. The method comprises monitoring communication for determining a control mode of a first channel. The control mode comprises a Reversionary Active Mode, the Reversionary Active Mode providing a control characteristic for limited augmented feel capability to the operator of the vehicle; and an Active Mode, wherein the Active Mode providing a control characteristic for fully augmented feel capability to the operator of the vehicle.

Preferably, the monitoring communication further comprises receiving a signal message, the signal message comprises a vehicle control command; and monitoring the signal message for detecting a fault in the signal message. If the fault in the signal message is detected then setting the control mode to the Reversionary Active Mode.

Preferably, the fault of the signal message is detected in occurrences of at least one of: receiving the signal message intermittently, not receiving the signal message, not receiving the signal message at an expected rate, receiving the signal message that has been corrupted, and receiving the signal message that does not have an expected integrity.

Preferably, the monitoring communication further comprises determining availability of other signal message. If the other signal message is available, then receiving the other signal message; and monitoring the other signal message for detecting a fault in the other signal message, wherein if the fault in the other signal message is detected then set the control mode to the Reversionary Active Mode; and if no fault in the other signal message is detected then set to the control mode to the Active Mode.

Preferably, the method comprises determining a second control mode of other channel, and if the second control mode of the other channel is the Active Mode, then relinquish control to maintain the Active Mode for the vehicle; and if the second control mode of the other channel is the Reversionary Active Mode, then activate the Reversionary Active Mode.

Preferably, monitoring communication for determining the second control mode of the other channel comprises receiving the signal message; and monitoring the signal message for detecting a fault in the signal message.

Preferably, the first channel and the other channel are segregated.

Preferably, the control characteristic comprises a default setting for each of control axis of the vehicle. Preferably, the control characteristic is stored in the EU.

Preferably, the method comprises providing a warning on a control panel of the vehicle notifying a failure of the vehicle management system.

According to an aspect of the invention there is provided a tactile cueing apparatus system comprises at least one Electronic Unit, EU, as described in the preceding paragraphs, one or more actuators configured to control force being applied on axes of a controller of a vehicle, and one or more sensors for detecting force being applied to the controller. The EU is configured to control the actuator for continued operation of the vehicle with augmented feel for the operator based on the sensing data from the one or more sensors.
According to an aspect of the invention there is provided a vehicle comprising one or more Electronic Unit, EU, as described in the preceding paragraphs and/or the tactile cueing apparatus system as described in the preceding paragraphs.

### BRIEF DESCRIPTION OF THE FIGURES

The invention will now be described by way of example only with reference to the figures, in which:
Figure 1 is a schematic diagram that illustrates tactile cueing apparatus according to the present invention;
Figure 2 is a schematic diagram that illustrates system of an aircraft comprising the tactile cueing apparatus according to the present invention;
Figures 3 to 5 are a schematic diagram that illustrates different configurations of the system according to the present invention;
Figure 6 is a flow chart of a method for continuous provision of augmented feel for an operator according to the present invention; and
Figures 7 and 8 are diagrams of a vehicle comprising the system of the present invention.

### DETAILED DESCRIPTION

The present invention relates to a tactile cueing apparatus for a vehicle. Tactile cueing is the generation of artificial "feel" in an operator's controller of the vehicle which otherwise would be absent or reduced because of the presence of power assistance between the controller and the vehicle management system or other controlled element which it operates. For example, the artificial feel is used for: unassisted flight control systems in which aerodynamic loads on the flight control surfaces do not themselves generate sufficient tactile feedback to the pilot (e.g., in very light helicopters and fixed wing aircraft), and in other aircraft mechanical controls which may need tactile feedback (e.g., a twist grip engine throttle control in a helicopter). A use of tactile cueing apparatus for providing an alternative to such mechanical device for the pilot of such mature aircraft can be upgraded without the expense of retrofitting fully fly-by-wire systems to the aircraft.

The present invention provides continuous augmented feel for the operator such that the vehicle does not lose all the augmented feel (e.g., by entering a passive mode) if there is a failure of all vehicle management systems. The operator is continuously provided with enhanced feel even without any command from the vehicle management systems. The passive mode refers to the disengagement of the tactile cueing apparatus such that augmented feel is not applied to the controller. The disengagement may comprise a clutch being disengaged if the tactile cueing apparatus comprises a clutch between itself and the control surface of the vehicle.

The description uses an aircraft system to illustrate an example of the invention, but it is possible to apply the invention on any type of vehicles, for example but not limited to aircrafts, maritime vessels, that have a safety critical vehicle management system. In the described example the vehicle refers to an aircraft, the vehicle manage system refers to a flight control computer, FCC. In the following detailed description, references are made to the accompanying drawings that form a part hereof, and which are shown by way of illustration of specific configurations or examples. Referring now to the drawings, in which like numerals represent like elements throughout the several Figures. When describing common characteristic of the elements, the numerals are used even if they are represented with alphabet at the end. For example, the electronic units 1A and 1B are referred collectively as electronic unit 1 in the description.

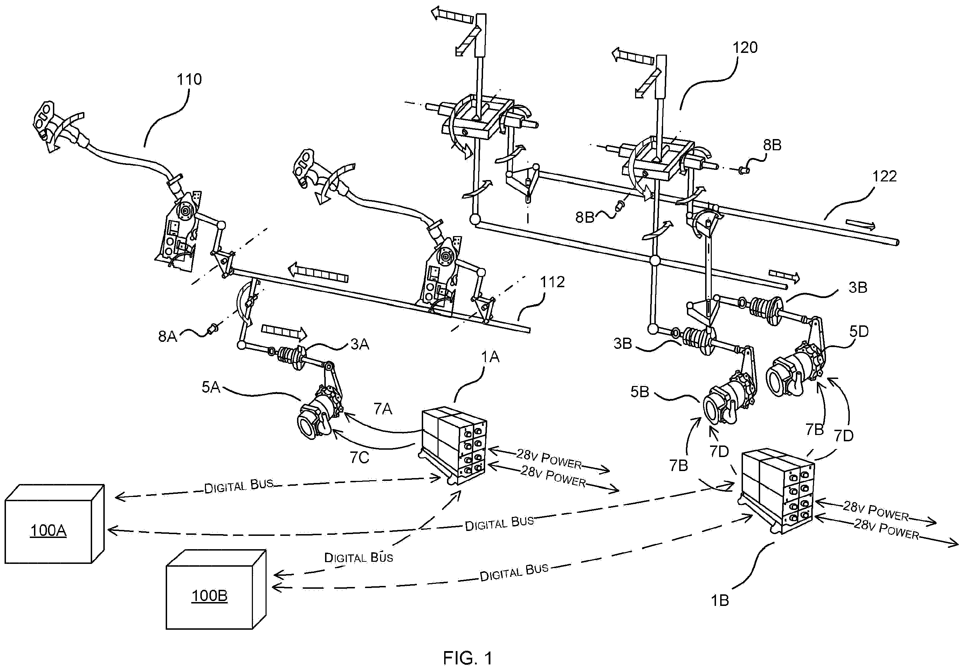

Figure 1 illustrates an example of tactile cueing apparatus. Figure 1 illustrates the tactile cueing apparatus connected to a controller of an aircraft. The tactile cueing apparatus comprises at least one Electronic Unit, EU, 1 and one or more sensors 3, 8 and one or more actuators 5. The one or more actuators 5 are configured to control force being applied on axes of a controller 110, 120 of a vehicle (i.e., the aircraft). The one or more sensors 3, 8 comprise a force sensor 3 and a position sensor 8. The force sensor is configured to detect force being applied to the controller 110, 120. The position sensor 8 is configured to detect the position of the controller 110, 120 relative to each axes. The position sensor 8 is located in upstream of the control mechanism of the vehicle compared to the force sensor 3. The force sensor 3 is located proximate to its respective actuator 5. The one or more sensors 3, 8 detect the force to be applied and force being applied and position demand. The tactile cueing apparatus drives the actuation in response to the detected force and the position of the mechanism of the controllers. The EU 1 is configured to control the actuator 5 for continued operation of the vehicle with augmented feel for the operator. Mechanical linkages of the aircraft are connected directly to the aircraft aerodynamic control surfaces (in the case of a mechanical aircraft control system), or through a fly-by-wire control system. The mechanical linkages include controllers.

Figure 1 illustrates two different types of controllers used on aircrafts: a collective/thrust controller 110 and a cyclic controller 120. These controllers are connected to mechanical control elements 112, 122 of the aircrafts.

The collective/thrust controller 110 communicates with a vehicle management system (i.e., a Flight Control Computer, FCC) 100A, 100B via the EU 1A of the tactile cueing apparatus. The collective/thrust controller 110 is connected to control surfaces. The control surfaces are connected with a force sensor 3A and a position sensor 8A. The force sensor 3A is placed between the control surfaces and the actuator 5A of the EU 1A. The sensor 3A measures force being applied to and received by the collective/thrust controller 110 in various axes of control. The position sensor 8A detects position of the mechanical control elements. The EU 1A is adapted for collective control of the aircraft. The EU 1A is configured to communicate with the first FCC 100A and the second FCC 100B and to transmit signals indicative of the collective control (e.g., thrust) to the actuator 3A. The FCC 100A and 100B use digital bus to communicate with the EU 1A. The actuator 3A provides enhanced feel by, for example but not limited to, providing tactile cues, removing frictions, creating resistance.

The cyclic controller 120 communicates with a vehicle management system (i.e., a Flight Control Computer, FCC) 100A, 100B via the EU 1B of the tactile cueing apparatus. The cyclic controller 120 is connected control surfaces 122. The control surfaces 122 are connected with the force sensors 3B and the position sensors 8B. The force sensors 3B are placed between the control surfaces 122 and the actuators 5B of the EU 1B. Each of the force sensors 3B measures force being applied to and received by the cyclic controller 120 in various axes of control. Each of the position sensor 8B detects position of the mechanical control elements. The EU 1B is adapted for cyclic control of the aircraft. The EU 1B is configured to communicate with the first FCC 100 A and the second FCC 100B and to transmit signals comprising pitch and roll force control to the actuators 3B. The FCC 100A and 100B use digital bus to communicate with the EU 1B. The actuators 3B provide enhanced feel by, for example but not limited to, providing tactile cues, removing frictions, creating resistance. Each of the FCCs may be powered by 28V DC. A LinkEdge ^{™} is an example of a system that is configured to communicate with a flight control system and to provide augmented feel for the operator.

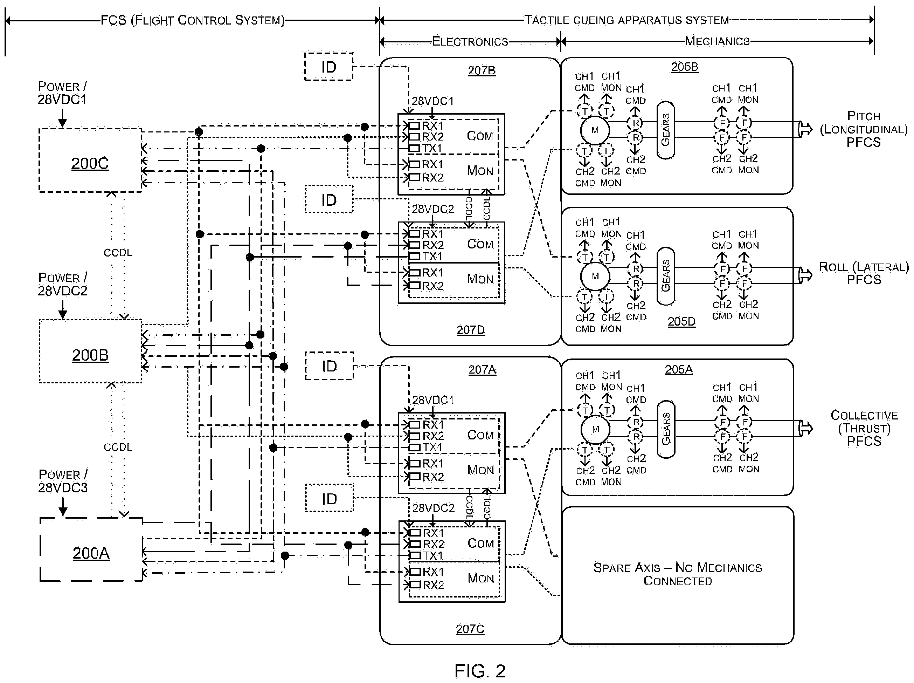

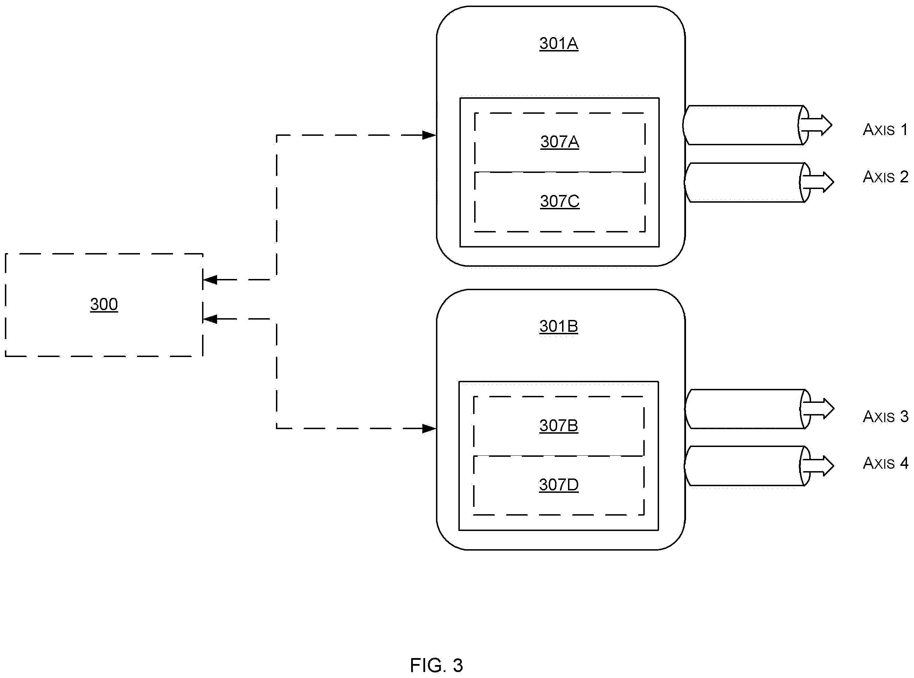

Figure 2 illustrates an example system of an aircraft comprising the tactile cueing apparatus according to the present invention. The diagram shows the communication links between different systems and their components. Figure 2 is an example of data communication that occur in the system described in Figure 1 with an extra FCC. Each of the FCCs 200A-C communicates with individual channels 207A-D of the system. The system comprises two EUs. Each EU comprises two channels. Each channel 207A-D has a pair of function, command and monitor. The actuator 205A-D couples EUs of the tactile cueing apparatus of the system with mechanical control parts of the aircraft. The workings of EU are described in light of Figures 3 to 5. In the diagram Ⓕrefers to force transducer, Ⓡrefers to motor position resolver, Ⓡrefers to Dual-wound three phase motor and Ⓣ refers to temperature transducer. The FCCs 200A-C communicate to each other via a digital interface.

Figure 3 illustrates an example of the EU for the tactile cueing apparatus for the vehicle according to the present invention. Figure 3 shows the EU configured to communicate with a single vehicle management system 300. The EU 301 is configured to provide continuous augmented feel for the operator. The tactile cueing apparatus is configured to augment feel for the operator (i.e., pilot) of the vehicle (i.e., aircraft). The tactile cueing apparatus is configured to provide continuous augmented feel for the operator. The EU 301A comprises a first channel 307A. A channel of the EU is also referred to as a computing element. The computing element is configured to provide command function, monitor function, receive function and transmit function. The purpose of the channel 307 of the EU 301 is to generate commands to its actuators 5 based on the sensed controller force from respective force sensors 3 and/or sensed positional information from position sensors 8. The first channel 307A is configured to monitor communication of systems of the vehicle for determining a control mode of the first channel. The systems of the vehicle comprise vehicle management systems such as FCCs. The control mode comprises a Reversionary Active Mode, the Reversionary Active Mode providing a control characteristic for limited augmented feel capability to the operator of the vehicle; and an Active Mode, wherein the Active Mode providing a control characteristic for fully augmented feel capability to the operator of the vehicle. The first channel 307A is configured to receive a signal message. The signal message is from the vehicle management system 300. The vehicle management system 300 is a safety critical system. The signal message comprises a vehicle control command. The vehicle control command comprises information on the control of, for example, cyclic pitch, cyclic roll, collective/thrust, yaw. The first channel 307A is configured to monitor the signal message. The first channel 307A monitors to detect whether there is a fault in relation to the signal message.

If the first channel 307A does not detect the fault in the signal message, then the first channel 307A is set to provide Active Mode. If the first channel 307A was already in the Active Mode, then the first channel 307A maintains its control mode to Active Mode. The first channel 307A maintains control and the EU 301A is configured to operate an actuator 5 via the first channel 307A and continue with an Active Mode. If the first channel 307A was in the Reversionary Active Mode, then the first channel 307A set its control mode to the Active Mode. The first channel 307A only controls the tactile cueing apparatus when no other channels have set their control mode to Active Mode and relinquish their control. The Active Mode is normal operational mode with the tactile cueing apparatus providing full, dynamic augmented feel for the operator. For example, the pilot controls the aircraft with tactile feedback from FCC signals via the tactile cueing apparatus. The tactile cueing apparatus is configured to provide tactile cues, remove frictions, and improve movements of the controllers that can be caused by the limitation of the aircraft. It is possible to maintain the Active mode if the vehicle management system 300 does not stop sending the signal messages in continuous manner at the expected rate. The expected rate is based on the type of vehicle and its architecture. The feel the operator receives in relation to axis 1 to axis 4 of control are enhanced so the operator can control the controller in an efficient and effective manner. In an example, axis 1 may relate to collective/thrust axis. Axis 2 may be spare. Axis 3 may relate to pitch (longitudinal). Axis 4 may relate roll (lateral).

If the fault of the signal message is detected, then the first channel 307A sets its control mode to the Reversionary Active Mode. The Reversionary Active Mode provides a control characteristic for limited augmented feel capability to the operator of the vehicle. The Reversionary Active Mode differs from the Active mode in that it does not provide dynamic adjustment and does not feedback based on the real-time control from the operator. The control characteristic provided by the Reversionary Active Mode comprises a default setting for each of control axes of the vehicle.

The control characteristic comprises information relation to the vehicle's inertial, damping control, gradient control etc. The default settings are stored in the EU 301. The default settings are based on the type of vehicle. For example, a jet and a helicopter have different default settings. Alternatively, or additionally, the default settings are based on the type of controllers. For example, the cyclic controller 120 and collective/thrust controller 110 comprise different default settings.

The fault may occur when the vehicle management system 300 malfunctions or is damaged. The EU 301 detects the fault by monitoring transmission from the vehicle management system 300.

The first channel 307A is configured to detect the fault in the signal message when the signal message intermittently is received. The first channel 307A is configured to detect the fault in the signal message when the signal message is not received at an expected rate. The first channel 307A is configured to detect the fault in the signal message when the signal message is not received. In general, the signal message is continuously transmitted from the vehicle management system 300. In these cases, where the vehicle management system 300 transmits the signal message intermittently, at an unexpected rate or stops all together then there is some problem with the vehicle management system 300.

The first channel 307A is configured to detect the fault of the signal message if the signal message received is corrupted. The first channel 307A is configured to integrity check the signal message. The integrity check is carried out individual channels 307A-D of the EU 301. The first channel 307A is configured to detect the fault of the signal message when the signal message received does not have an expected integrity. The first channel 307A transmits high integrity signal message to provide augmented feel, because control command needs to have high integrity data for the safety of the operator and the vehicle.

For the purpose of safety, compromised integrity of data and data from a compromised vehicle management system 100 are not used. The EU 301 ensures that the integrity and safety of the vehicle is maintained while providing continuous augmented feel for the operator.

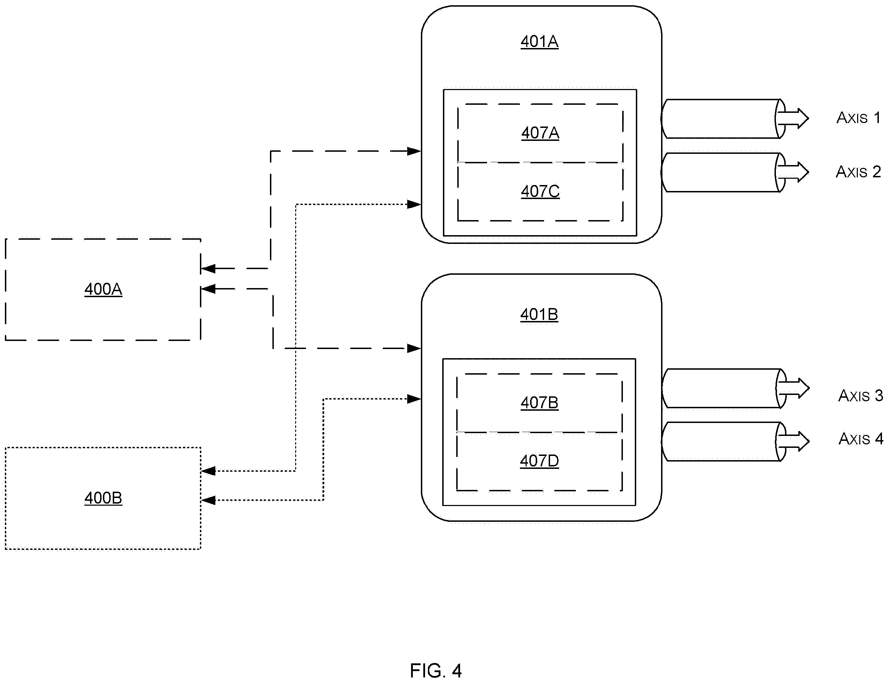

Additionally, the first channel 307A is configured to monitor communication for determining availability of other signal message. The first channel 307A is configured to determine availability of other signal message. If the fault of the signal message is detected and the other signal message is not available, then the first channel 307A sets its control mode to the Reversionary Active Mode. If the fault of the signal message is detected and the other signal message is available, then the first channel 307A iterates the step of monitoring the other signal message as the first channel 307A performed on the signal message. In this way if all the signal message the first channel 307A receives have fault that the first channel 307A sets its control mode to the Reversionary Active Mode. The determining of the availability of other signal message may comprise receiving the other signal message and/or receiving signal indicative of the availability of the other signal message. The first channel 307A may be configured to receive the other signal message after the determination of the availability of the other signal. The other signal message may originate from the first vehicle management system 300 after it has recovered from a malfunction. Alternatively, the other signal message originates from a second vehicle management system 400B (shown in Figure 4).

Additionally, or alternatively, the first channel 307A is configured to determine a second control mode of other channel 307C. If the second control mode of the other channel 307C is the Active Mode, then the first channel 307A relinquishes control. In this way, the tactile cueing apparatus maintains the Active Mode for the vehicle. If the second control mode of the other channel 307C is the Reversionary Active Mode, then the first channel 307A activates the Reversionary Active Mode.

Additionally, or alternatively, the other channel 307C is configured to monitor the communication for determining the second control mode of the other channel 307C by receiving the signal message; and monitoring the signal message for detecting a fault in the signal message. The signal message originates from the vehicle management system 300.The first channel 307A and the other channel 307C are segregated. The first channel 307A and the other channel 307C is co-located in a single EU or distributed across different EUs of the tactile cueing apparatus. Regardless of the location of the channels, the first channel 307A and the other channel 307C are segregated and independent of each other. In this way, the integrity of the channel is maintained, ensuring the safety and robustness of the tactile cueing apparatus system on the vehicle.

The first channel 307A and the other channel 307C are configured to provide the same functionality. The other channel 307C is configured to perform all the operations of the first channel 307A described herein. In the example, if the first channel 307A sets its control mode to Reversionary Active Mode and the other channel 307C remains in Active Mode, then the first channel 307A relinquishes its control. The other channel 307C takes the control and maintains the control mode of the tactile cueing apparatus to Active Mode.

The EU 301B has the same functionality as the EU 301A. The description above also can be applied to EU 301B. Alternatively, or additionally, each of the channels 307B, 307D is configured to receive the signal message from the vehicle management system 300 and monitor the signal message. Each of the channels 307A-D is configured to determining the control mode of one another. If there is a channel with Active Mode, then the channel takes the precedence in controlling the tactile cueing apparatus. In this way, the vehicle remains in the Active Mode unless there is some kind of failure in the vehicle's system.

Figure 4 illustrates examples of EU according to the present invention. Figure 4 includes all the features described in Figure 3. In addition, Figure 4 comprises an additional vehicle management system 400B. Figure 4 shows the tactile cueing apparatus with two EUs 401A, 401B. Each of the two EUs 401A, 401B comprises the first channel 407A, 407B and the other channel 407C, 407D. The function of each of the channels is as described in relation to Figure 3. As can be seen in Figure 4, the two EUs 401A, 401B are both configured to communicate with each of the vehicle management system 400A, 400B independent of each other. This is to ensure high integrity of the data and systems on the vehicle to reduce the probability of system failure.

The first channel 407A is configured to receive and monitor the signal message from the vehicle management system 400A as described above. The first channel 407A is configured to receive other signal message. The other signal message is originated from the vehicle management system 400A that has recovered from malfunction or recovered from failure. Alternatively, the other signal message is originated from a second vehicle management system 400B. The vehicle may have a plurality of vehicle management systems. In such case, the first channel 407A of the tactile cueing apparatus communicates with each of the plurality of the vehicle management systems 400. The communication is continuous.

If the first channel 407A detects fault of the signal message from the vehicle management system 400A, the first channel 407A automatically seeks the second signal message from other available vehicle management system 400B for a valid signal message before setting its control mode to the Reversionary Active Mode.

The tactile cueing apparatus may comprise one or more EUs. Each of the one or more EUs comprises one or more channels. Each channel has internal monitoring function to detect the fault in signal messages received from one or more vehicle management system of the vehicle.

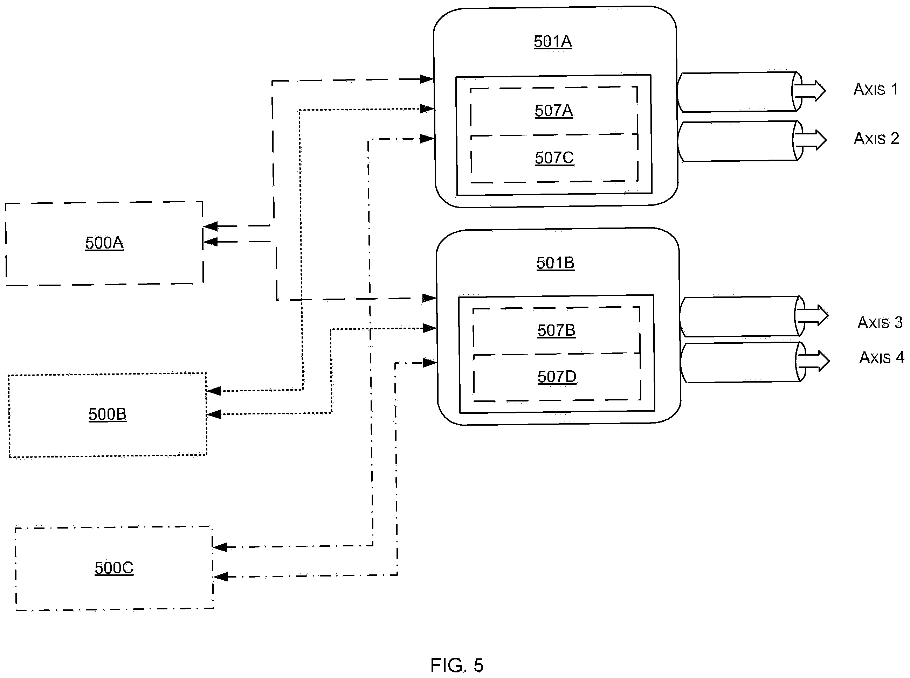

Figure 5 illustrates examples of EUs according to the present invention. Figure 5 includes all the features of Figure 4. The description of Figures 3 and 4 applies to the corresponding components of Figure 5. Figure 5 additionally comprises a third vehicle management system 500C. The two EUs 501A, 501B shown in Figure 5 is configured to communicate with the third vehicle management system 500C. Each of the two EUs 501A, 501B is configured to communicate with three vehicle management systems 500A-C of the vehicle. The two EUs 501A, 501B establish communication with each of the three vehicle management systems independently from each other. The function of each of the EUs 501A, 501B is as described in relation to Figures 3 and 4. The EU 501 is configured to monitor signal messages from each of the three management systems so that if there is a failure of any of the management systems, the EU 501 still can obtain necessary data from the other available management system. If all the vehicle management system 500A-C fail, then the EU 501 changes the control mode of the vehicle from the Active mode to the Reversionary Active Mode. The EU 501 operates in the Reversionary Active Mode. This ensures that the operator is continuously supported and receive the augmented feel, although without real-time dynamic adjustments is available. The Reversionary Active Mode offers advantages over entering passive mode in that the operator continuously receives support in controlling the vehicle. Regardless of lost communication with the vehicle management systems of the vehicle, in the Reversionary Active Mode, the enhanced tactile feedback is not complete lost.

In the examples of Figures 3 to 5, the EU comprises two channels with four processor (i.e., duo duplex architecture). Two processors are paired for a channel providing command function and monitor function. It is possible to have more channels, but currently such design is not efficient as components would cost more to manufacture and increase computational complexity without significant benefit to the system. Each of the EU may comprise three processors. Each of the processors in the channel may be manufactured using different technologies to avoid common failure modes and to meet the high integrity standards. The technologies refer to hardware, software and architecture of the processors.

Alternatively, or additionally, the tactile cueing apparatus is configured to work with a fly-by-wire system. The controller of the aircraft may be paired: one for a pilot and another for co-pilot. The pilot controller and the co-pilot controllers are designed to correspond to each other such that the controllers move synchronously. In the Active mode, the pilot controller and the co-pilot controller move in the same way. If the aircraft goes into a passive mode, the two controllers decouple and act separately from each other. This causes initial conflict, jeopardising the safety of the aircraft. By providing the Reversionary Active Mode, the decoupling of the pilot controller and the co-pilot controller is prevented providing a safe control of the aircraft. The present invention provides the tactile cueing apparatus system that does not enter the passive mode unless the tactile cueing apparatus system fails completely.

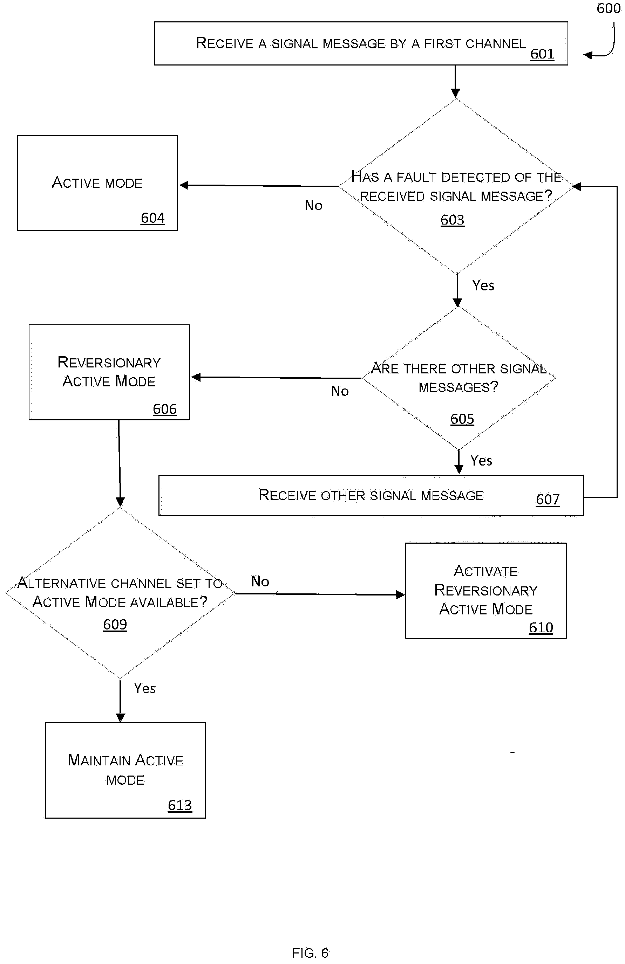

Figure 6 illustrates an example method 600 according to the present invention. The method comprises a step of monitoring communication for determining a control mode. The control mode comprises a Reversionary Active Mode, the Reversionary Active Mode providing a control characteristic for limited augmented feel capability to the operator of the vehicle; and an Active Mode, wherein the Active Mode providing a control characteristic for fully augmented feel capability to the operator of the vehicle.

The step of monitoring communication comprises, at step 601, receiving a signal message by a first channel of an EU of a tactile cueing apparatus. The signal message originates from a vehicle management system. At step 603, the received signal message is monitored. The received signal message is monitored for fault detection. The first channel detects whether the received signal message comprises any fault.

The fault of the signal message is detected in occurrences of at least one of: receiving the signal message intermittently, not receiving the signal message, not receiving the signal message at an expected rate, receiving the signal message that has been corrupted, and receiving the signal message that does not have an expected integrity.

If the signal message does not comprise any fault, then the first channel maintains active mode, at step 604. The EU ensures that the tactile cueing apparatus operates in active mode.

The EU sets a control mode of the vehicle. The control mode comprises active mode and reversionary active mode. The control mode is set to active mode during a normal operational state, providing augmented feel to the users. The EU ensures that the tactile cueing apparatus operates in one of the control modes available.

The monitoring communication further comprises determining availability of other, signal message. If a fault is detected of the signal message, the first channel checks other signal messages at step 605. The other signal message is originated from the vehicle management system. Additionally, or alternatively, the other signal message is originated from other vehicle management system of the vehicle.

If the fault of the signal message is detected in the occurrence of not receiving the signal message from the vehicle management system for a predetermined time period, automatically using a second signal message received from a second vehicle management system. If the first channel detects fault of the signal message from the vehicle management system, the first channel automatically seeks the second signal message from the other available vehicle management system.

At step 607, if the first channel receives other signal message, the first channel monitors the other signal message for fault detection. The first channel repeats steps 603 - 607 with the other signal message. If the fault in the other signal message is detected, then the first channel sets the control mode to the Reversionary Active Mode; and if no fault in the other signal message is detected then the first channel sets to the control mode to the Active Mode

At step 605, if the there are no other signal messages, then the first channel sets the control mode as the Reversionary Active Mode (step 606). At step 609, the first channel determines control modes of other channels in the tactile cueing apparatus. The first channel determines a second control mode of other channel. If the second control mode of the other channel is the Active Mode, then relinquish control to maintain (613) the Active Mode for the vehicle. The first channel relinquishes its control to the other channel that is set to provide the Active Mode. So, the EU maintains the Active Mode at step 613. The other channel takes control to ensure continued operation without having to activate the Reversionary Active Mode.

The other channel is configured to operate in the same manner as the first channel. The other channel is configured to monitors to detect a fault in the signal message. If the second control mode of the other channel is the Reversionary Active Mode, then activate the Reversionary Active Mode. If there is no alternative channel that is set to provide the Active Mode, then activates the Reversionary Active Mode at step 610. The first channel maintains control.

The EU output control signal via one of the channels. The control signal is received by the actuators 5 coupled to the EU 1 so that it operates the controller of the vehicle to create a desired resistance, remove unnecessary resistance, tactile cues for the operator.

If the EU activates the Reversionary Active Mode, at step 610, the EU maintains the Reversionary Active Mode until the EU receives a signal message with no fault. The signal message without fault may be from any one of the vehicle management systems of the vehicle. In this way the vehicle remains in the Reversionary Active Mode until the Active Mode is reactivated or the vehicle finishes its journey.

If no fault in the other signal message is detected while the EU is in the Reversionary Active Mode, then the control mode changing from the Reversionary Active Mode to the Active Mode. For example, in a scenario, a temporary malfunctioned vehicle management system recovers and operates correctly and transmits a signal message without fault. The first channel sets the control mode to the Reversionary Active Mode. In response to receiving the signal message without fault, the first channel sets the control mode to the Active Mode.

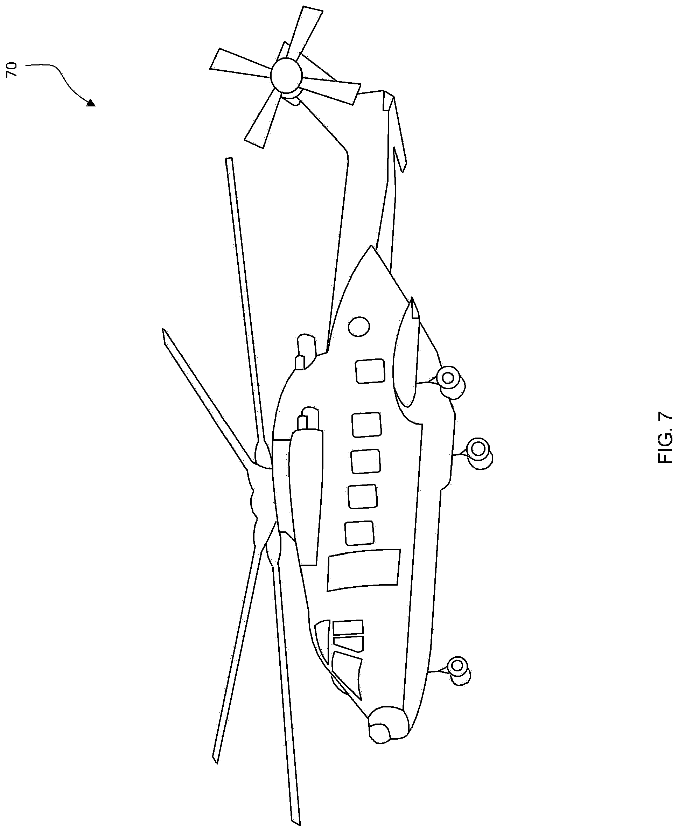

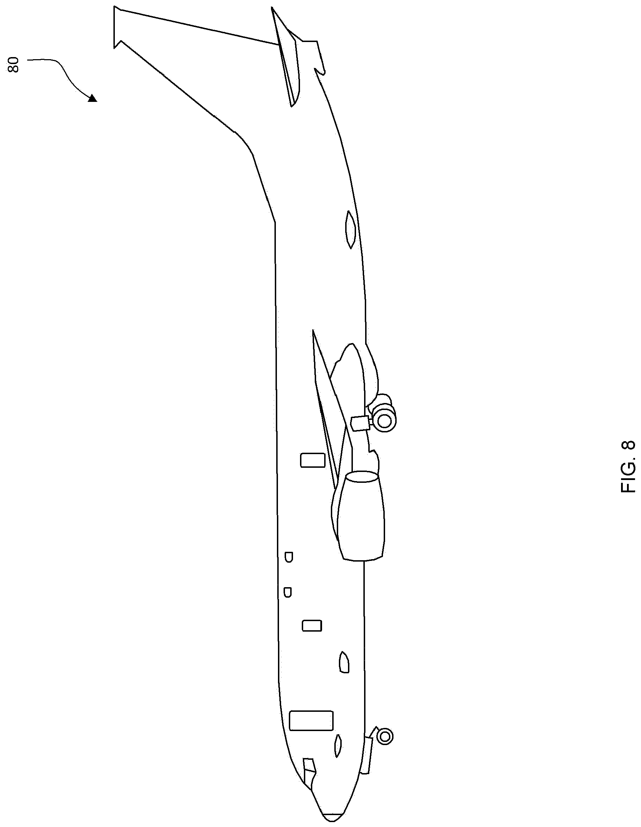

Figures 7 and 8 show examples of vehicle that comprise one or more tactile cueing apparatus as described herein, and one or more EUs as describe herein.

The method described with relation to Figure 6 may be stored as instructions on a machine-readable medium. That when executed cause a processing means to perform the method of Figure 6.

## Claims

1. An Electronic Unit, EU, for a tactile cueing apparatus system for a vehicle, the tactile cueing apparatus augments feel for an operator of the vehicle, the EU comprising a first channel (407A):
the first channel (407A) is configured to:
monitor communication for determining a control mode of the first channel, wherein the control mode comprises:
a Reversionary Active Mode, the Reversionary Active Mode providing a control characteristic for limited augmented feel capability to the operator of the vehicle; and
an Active Mode, wherein the Active Mode providing a control characteristic for fully augmented feel capability to the operator of the vehicle.

2. The EU according to claim 1, wherein the first channel (407A) is configured to monitor communication by:
receiving a signal message, the signal message comprises a vehicle control command; and
monitoring the signal message for detecting a fault in the signal message; and
if the fault in the signal message is detected then set the control mode to the Reversionary Active Mode.

3. The EU according to claim 1, wherein the fault in the signal message is detected in occurrences of at least one of:
receiving the signal message intermittently;
not receiving the signal message;
not receiving the signal message at an expected rate;
receiving the signal message that has been corrupted; and
receiving the signal message that does not have an expected integrity.

4. The EU according to claim 2 or claim 3, wherein the signal message is originated from a vehicle management system.

5. The EU according to any one of the preceding claims, wherein the first channel (407A) is further configured to monitor communication for determining availability of other signal message; wherein if the other signal message is not available then set the control mode to the Reversionary Active Mode.

6. The EU according to any one of preceding claims, wherein the first channel (407A) is further configured to monitor communication for determining availability of other signal message, wherein if the other signal message is available, then the first channel (407A) is further configured to:
receive the other signal message; and
monitor the other signal message for detecting a fault in the other signal message, wherein
if the fault in the other signal message is detected then set the control mode to the Reversionary Active Mode; and
if no fault in the other signal message is detected then set the control mode to the Active Mode.

7. The EU according to claim 5 or claim 6, wherein the other signal message is originated from a second vehicle management system (400B).

8. The EU according to any one of preceding claims, wherein the first channel (407A) is configured to:
determine a second control mode of other channel (407C), and
if the second control mode of the other channel (407C) is the Active Mode then relinquish control to maintain the Active Mode for the vehicle; and
if the second control mode of the other channel (407C) is the Reversionary Active Mode then activate the Reversionary Active Mode, and optionally the other channel (407C) is configured to:
monitor communication for determining the second control mode of the other channel (407C) by:
receiving the signal message; and
monitoring the signal message for detecting a fault in the signal message.

9. The EU according to claim 8, wherein the first channel (407A) and the other channel are segregated.

10. A computer-implemented method for an Electronic Unit, EU, for a tactile cueing apparatus for a vehicle, the method comprising:
monitoring communication for determining a control mode of a first channel, wherein the control mode comprises:
a Reversionary Active Mode, the Reversionary Active Mode providing a control characteristic for limited augmented feel capability to the operator of the vehicle; and
an Active Mode, wherein the Active Mode providing a control characteristic for fully augmented feel capability to the operator of the vehicle.

11. The method according to claim 10, wherein the monitoring communication further comprises:
receiving (601) a signal message, the signal message comprises a vehicle control command;
monitoring the signal message for detecting (603) a fault in the signal message;
if the fault in the signal message is detected then setting (606) the control mode to the Reversionary Active Mode,
optionally, the fault in the signal message is detected in occurrences of at least one of:
receiving the signal message intermittently;
not receiving the signal message;
not receiving the signal message at an expected rate;
receiving the signal message that has been corrupted; and
receiving the signal message that does not have an expected integrity.

12. The method according to any one of claims 10 to 11, wherein the monitoring communication further comprises:
determining (605) availability of other signal message, and
if the other signal message is available, then receiving the other signal message; and monitoring the other signal message for detecting a fault in the other signal message, wherein:
if the fault in the other signal message is detected then set the control mode to the Reversionary Active Mode; and
if no fault in the other signal message is detected then set to the control mode to the Active Mode.

13. The method according to any one of claims 10 to 12, comprising:
determining (609) a second control mode of other channel, and
if the second control mode of the other channel is the Active Mode, then relinquish control to maintain (613) the Active Mode for the vehicle; and
if the second control mode of the other channel is the Reversionary Active Mode, then activate (610) the Reversionary Active Mode, and the method optionally comprising monitoring communication for determining the second control mode of the other channel by:
receiving the signal message; and
monitoring the signal message for detecting a fault in the signal message.

14. A tactile cueing apparatus system comprises:
at least one Electronic Unit, EU, according to claims 1 to 9;
one or more actuators configured to control force being applied on axes of a controller of a vehicle; and
one or more sensors for detecting force being applied to the controller, wherein the EU is configured to control the actuator for continued operation of the vehicle with augmented feel for the operator based on the sensing data from the one or more sensors.

15. A vehicle comprising one or more Electronic Unit, EU, according to claims 1 to 9 and/or the tactile cueing apparatus system according to claim 14.
